# EUROPEAN PATENT SPECIFICATION

(11) **EP 3 444 126 B1**
(45) Date of publication and mention of the grant of the patent: **05.08.2020**
(21) Application number: 18187845.5
(22) Date of filing: 07.08.2018
(51) Int. Cl.: B60C 1/00

(54) **METHOD OF MAKING A FUNCTIONALIZED ELASTOMER**
VERFAHREN ZUR HERSTELLUNG EINES FUNKTIONALISIERTEN ELASTOMERS
PROCÉDÉ DE FABRICATION D'UN ÉLASTOMÈRE FONCTIONNALISÉ

(30) Priority: 15.08.2017 US 201715677515; 15.08.2017 US 201715677531
(43) Date of publication of application: 20.02.2019
(73) Proprietor: The Goodyear Tire & Rubber Company, Akron, OH 44316 (US)
(72) Inventor: MECKING, Stefan, D-79464 Konstanz (DE); FLOOK VIELHABER, Margaret, Kent, Ohio 44240 (US); LEICHT, Hannes, D-78467 Konstanz (DE); GOTTKER GENANNT SCHNETMANN, Inigo, D-78462 Konstanz (DE)
(74) Representative: Kutsch, Bernd

(56) References cited:
- EP-A1- 3 042 786
- EP-A1- 3 181 593
- US-B1- 6 344 538
- US-B1- 8 598 286
- HANNES LEICHT ET AL: "Synergetic Effect of Monomer Functional Group Coordination in Catalytic Insertion Polymerization", JOURNAL OF THE AMERICAN CHEMICAL SOCIETY, vol. 139, no. 20, 15 May 2017 (2017-05-15) , pages 6823-6826, XP055440730, ISSN: 0002-7863, DOI: 10.1021/jacs.7b03087

## Description

### Background of the Invention

Stereoregular polymers like polypropylene and polydienes are produced on a large scale by catalytic insertion polymerization. The production of synthetic rubbers like polybutadiene and polyisoprene traditionally employs Ziegler-Natta catalysis based on e.g. Ti, Co, or Ni, and Nd catalysts. Nd-based systems are known to yield butadiene rubber with the highest 1,4-*cis* content. This is important, as microstructure control is paramount in the synthesis of synthetic rubber because it translates directly to different polymer properties like glass transition temperature, crystallinity, or strain-induced crystallization. These properties are significant for tire manufacturing, the main application of synthetic rubber. Besides microstructure control, the functionalization with polar groups can give access to improved properties of such materials. Especially for tire applications, enhanced interactions with the filler materials used (e.g. silica or carbon black) are desired. However, copolymerizations of 1,3-butadiene or isoprene with polar functionalized dienes are exclusively accomplished by free-radical methods that do not allow control over the polymer's microstructure. Recently work discloses the stereoselective insertion copolymerization of 1,3-butadiene and isoprene with various different polar functionalized dienes using cationic (allyl)Ni complexes (Leicht et al. ACS Macro Letters 2016, 5, (6), 777-780). The copolymerization of isoprene and 2-(4-methoxyphenyl)-1,3-butadiene catalyzed by a β-diketiminato yttrium bis(alkyl) complex was also recently reported (Cui et al. Polym. Chem. 2016, 7, (6), 1264-1270.) In view of industrial applications, a need remains to develop methods exhibiting the functional group tolerance of simple *in-situ* catalyst systems that are preferred by industry.

EP-A-3 181 593 describes a copolymer of a monomer selected from the group consisting of 1,3-butadiene and isoprene and of a monomer of formula I of that document.

US-B1-6,344,538 describes functionalized monomers and polymerized functionalized monomers. It also describes a method of making a functionalized diene compound of the formula II of this application wherein Y may be NH₂, as well as polymerizing this functionalized diene compound to produce a functionalized diene polymer wherein this polymer is a copolymer comprising at least one monomer selected from the group consisting of butadiene, isoprene, piperylene and hexadienes.

### Summary of the Invention

The present invention is directed to a method of making an amine functionalized elastomer in accordance with claim 1.

Dependent claims refer to preferred embodiments of the invention.

In one aspect of the invention, the invention is directed to a method of making an amine functionalized elastomer, comprising the steps of: polymerizing at least one first monomer selected from the group consisting of 1,3-butadiene and isoprene and a second monomer of formula I in the presence of a lanthanide-based coordination polymerization catalyst in a hydrocarbon solvent to form a first copolymer in solution; 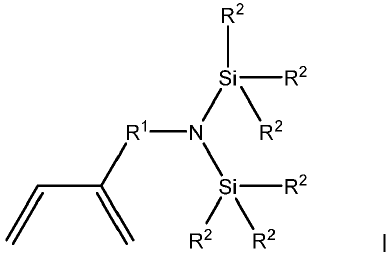 where R¹ is phenylene, a linear or branched alkane diyl group containing from 1 to 10 carbon atoms, or a combination of one or more phenylene groups and one or more linear or branched alkane diyl groups containing from 1 to 10 carbon atoms; and R² is methyl or ethyl;
mixing the first copolymer in solution with a protic solvent followed by stirring to convert the first copolymer to a second copolymer given by the formula poly(M1 co M2) wherein M1 is the first monomer and M2 is of formula II 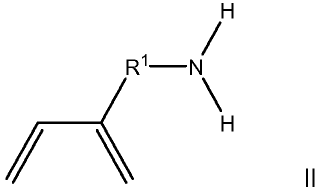 where R¹ is as previously defined.

### Brief Description of the Drawings

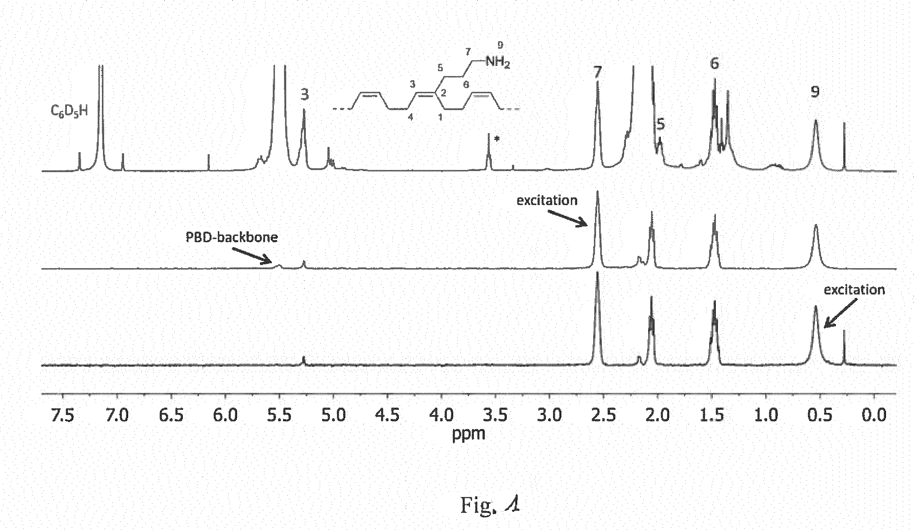

Figure 1 shows ¹H-NMR (topmost spectrum) and 1 D-TOCSY spectra of a BD-1 (a monomer of formula I with R¹ = propyl and R² = methyl) copolymer after cleavage of the TMS-groups with MeOH (table 1, entry 1-1, recorded at 27 °C in C₆D₆). Residual THF is marked with *.

### Detailed Description of the Invention

There is disclosed a method of making an amine functionalized elastomer, comprising the steps of: polymerizing at least one first monomer selected from the group consisting of 1,3-butadiene and isoprene and a second monomer of formula I in the presence of a polymerization catalyst in a hydrocarbon solvent to form a first copolymer in solution; 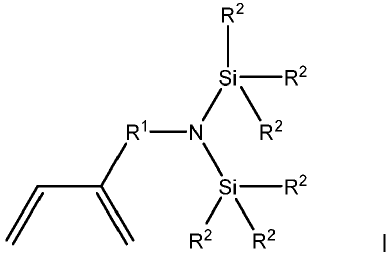 where R¹ is phenylene, a linear or branched alkane diyl group containing from 1 to 10 carbon atoms, or a combination of one or more phenylene groups and one or more linear or branched alkane diyl groups containing from 1 to 10 carbon atoms; and R² is methyl or ethyl;
mixing the first copolymer in solution with a protic solvent followed by stirring to convert the first copolymer to a second copolymer given by the formula poly(M1 co M2) wherein M1 is the first monomer and M2 is of formula II 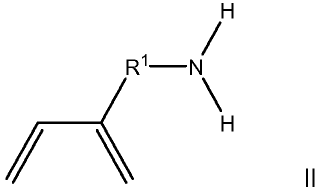 where R¹ is as previously defined.

The repeat units of the copolymer derived from the comonomers may exhibit random distribution throughout the copolymer, however block copolymer or tapered copolymers are also possible structures of the polymers. The properties of the resulting copolymers may depend strongly both on the nature of the insertion of the comonomer and on the blockiness of the copolymer incorporation.

The copolymers preferably have a high cis 1,4 microstructure of units derived from the first monomer and second monomer. In one embodiment, using butadiene as the first monomer, the copolymer comprises at least 90 percent by weight of cis 1,4 microstructure content based on the weight of the polybutadiene content of the copolymer. In one embodiment, the copolymer comprises at least 95 percent by weight of cis 1,4 microstructure content based on the weight of the polybutadiene content of the copolymer.

In a first step of the method, the first copolymer is made via solution polymerization in the presence of a polymerization catalyst. Suitable catalysts include lanthanide catalyst systems based on neodymium and the like, and nickel based catalysts.

In one embodiment, the catalyst system is a nickel based system. Such nickel based catalyst systems contain (a) an organonickel compound, (b) an organoaluminum compound, and (c) a fluorine containing compound. Such nickel based catalyst systems and their use in the synthesis of polydienes is described in detail in US-A-3,856,764, US-A-3,910,869, and US-A-3,962,375.

In one embodiment, the catalyst is a neodymium catalyst system: 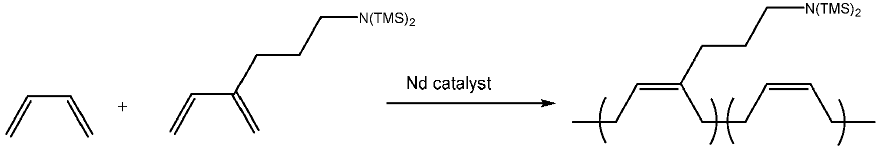 where R¹ and R² of units derived from monomer I are shown in the above example as propane diyl and trimethylsilyl groups.

Further description herein is directed to a neodymium based catalyst, although use of alternative lanthanide catalysts and nickel catalysts are also contemplated.

Such polymerizations are typically conducted in a hydrocarbon solvent that can be one or more aromatic, paraffinic, or cycloparaffinic compounds. These solvents will normally contain from 4 to 10 carbon atoms per molecule and will be liquids under the conditions of the polymerization. Some representative examples of suitable organic solvents include pentane, isooctane, cyclohexane, normal hexane, benzene, toluene, xylene, ethylbenzene, and the like, alone or in admixture.

In solution polymerizations that utilize the catalyst systems of this invention, there will normally be from 90 to 99 weight percent first monomer and 1 to 10 weight percent of second monomer in the polymerization medium. This second monomer concentration corresponds to a molar concentration of up to 2 mole percent. Higher second monomer incorporation is possible, including upto 4, 11, 20, 45 and even 100 mole percent of second monomer. Such polymerization mediums are, of course, comprised of an organic solvent, the monomer, and the catalyst system. In some embodiments, the polymerization medium will contain from 75 to 99.5 weight percent first monomer. In some embodiments, the polymerization medium will contain from 0.5 to 25 weight percent second monomer.

The neodymium catalyst system used in the process of this invention is made by preforming three catalyst components. These components are (1) an organoaluminum compound, (2) a neodymium carboxylate, and (3) a dialkyl aluminum chloride. In making the neodymium catalyst system the neodymium carboxylate and the organoaluminum compound are first reacted together for 10 minutes to 30 minutes in the presence of isoprene or butadiene to produce a neodymium-aluminum catalyst component. The neodymium carboxylate and the organoaluminum compound are preferable reacted for 12 minutes to 30 minutes and are more preferable reacted for 15 to 25 minutes in producing the neodymium-aluminum catalyst component.

The neodymium-aluminum catalyst component is then reacted with the dialkyl aluminum chloride for a period of at least 30 minutes to produce the neodymium catalyst system. The activity of the neodymium catalyst system normally improves as the time allowed for this step is increased up to about 24 hours. Greater catalyst activity is not normally attained by increasing the aging time over 24 hours. However, the catalyst system can be aged for much longer time periods before being used without any detrimental results.

The neodymium catalyst system will typically be preformed at a temperature that is within the range of from 0ºC to 100ºC. The neodymium catalyst system will more typically be prepared at a temperature that is within the range of from 10ºC to 60ºC. The neodymium catalyst system will preferably be prepared at a temperature that is within the range of from 15ºC to 30ºC.

The organoaluminum compound contains at least one carbon to aluminum bond and can be represented by the structural formula: 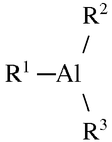 in which R¹ is selected from the group consisting of alkyl (including cycloalkyl), alkoxy, aryl, alkaryl, arylalkyl radicals and hydrogen: R² is selected from the group consisting of alkyl (including cycloalkyl), aryl, alkaryl, arylalkyl radicals and hydrogen and R³ is selected from a group consisting of alkyl (including cycloalkyl), aryl, alkaryl and arylalkyl radicals. Representative of the compounds corresponding to this definition are: diethylaluminum hydride, di-n-propylaluminum hydride, di-n-butylaluminum hydride, diisobutylaluminum hydride, diphenylaluminum hydride, di-p-tolylaluminum hydride, dibenzylaluminum hydride, phenylethylaluminum hydride, phenyl-n-propylaluminum hydride, p-tolylethylaluminum hydride, p-tolyl-n-propylaluminum hydride, p-tolylisopropylaluminum hydride, benzylethylaluminum hydride, benzyl-n-propylaluminum hydride, and benzylisopropylaluminum hydride and other organoaluminum hydrides. Also included are ethylaluminum dihydride, butylaluminum dihydride, isobutylaluminum dihydride, octylaluminum dihydride, amylaluminum dihydride and other organoaluminum dihydrides. Also included are diethylaluminum ethoxide and dipropylaluminum ethoxide. Also included are trimethylaluminum, triethylaluminum, tri-n-propylaluminum, triisopropylaluminum, tri-n-propylaluminum, triisopropylaluminim, tri-n-butylaluminum, triisobutylaluminum, tripentylaluminum, trihexylaluminum, tricyclohexylaluminum, trioctylaluminum, triphenylaluminum, tri-p-tolylaluminum, tribenzylaluminum, ethyldiphenylaluminum, ethyl-di-p-tolylaluminum, ethyldibenzylaluminum, diethylphenylaluminum, diethyl-p-tolylaluminum, diethylbenzylaluminum and other triorganoaluminum compounds.

The neodymium carboxylate utilizes an organic monocarboxylic acid ligand that contains from 1 to 20 carbon atoms, such as acetic acid, propionic acid, valeric acid, hexanoic acid, 2-ethylhexanoic acid, neodecanoic acid, lauric acid, stearic acid and the like neodymium naphthenate, neodymium neodecanoate, neodymium octanoate, and other neodymium metal complexes with carboxylic acid containing ligands containing from 1 to 20 carbon atoms.

The proportions of the catalyst components utilized in making the neodymium catalyst system of this invention can be varied widely. The atomic ratio of the halide ion to the neodymium metal can vary from 0.1/1 to 6/1. A more preferred ratio is from 0.5/1 to 3.5/1 and the most preferred ratio is 2/1. The molar ratio of the trialkylaluminum or alkylaluminum hydride to neodymium metal can range from 4/1 to 200/1 with the most preferred range being from 8/1 to 100/1. The molar ratio of isoprene or butadiene to neodymium metal can range from 0.2/1 to 3000/1 with the most preferred range being from 5/1 to 500/1.

The amount of catalyst used to initiate the polymerization can be varied over a wide range. Low concentrations of the catalyst system are normally desirable in order to minimize ash problems. It has been found that polymerizations will occur when the catalyst level of the neodymium metal varies between 0.05 and 1.0 millimole of neodymium metal per 100 grams of monomer. A preferred ratio is between 0.1 and 0.3 millimole of neodymium metal per 100 grams of monomer.

The concentration of the total catalyst system employed of course, depends upon factors such as purity of the system, polymerization rate desired, temperature and other factors. Therefore, specific concentrations cannot be set forth except to say that catalytic amounts are used.

Temperatures at which the polymerization reaction is carried out can be varied over a wide range. Usually the temperature can be varied from extremely low temperatures such as -60ºC up to high temperatures, such as 150ºC or higher. Thus, the temperature is not a critical factor of the invention. It is generally preferred, however, to conduct the reaction at a temperature in the range of from 10ºC to 90ºC. The pressure at which the polymerization is carried out can also be varied over a wide range. The reaction can be conducted at atmospheric pressure or, if desired, it can be carried out at sub-atmospheric or super-atmospheric pressure. Generally, a satisfactory polymerization is obtained when the reaction is carried out at about autogenous pressure, developed by the reactants under the operating conditions used.

The polymerization can be terminated by the addition of an alcohol or another protic source, such as water, with or without an added stabilizer such as BHT. Such a termination step results in the formation of a protic acid. However, it has been unexpectedly found that better color can be attained by utilizing an alkaline aqueous neutralizer solution to terminate the polymerization. Another advantage of using an alkaline aqueous neutralizer solution to terminate the polymerization is that no residual organic materials are added to the polymeric product.

Polymerization can be terminated by simply adding an alkaline aqueous neutralizer solution to the polymer cement. The amount of alkaline aqueous neutralizer solution added will typically be within the range of from 1 weight percent to 50 weight percent based upon the weight of the polymer cement. More typically, the amount of the alkaline aqueous neutralizer solution added will be within the range of from 4 weight percent to 35 weight percent based upon the weight of the polymer cement. Preferable, the amount of the alkaline aqueous neutralizer solution added will be within the range of from 5 weight percent to 15 weight percent based upon the weight of the polymer cement.

The alkaline aqueous neutralizer solution will typically have a pH which is within the range of 7.1 to 9.5. The alkaline aqueous neutralizer solution will more typically have a pH which is within the range of 7.5 to 9.0, and will preferable have a pH that is within the range of 8.0 to 8.5. The alkaline aqueous neutralizer solution will generally be a solution of an inorganic base, such as a sodium carbonate, a potassium carbonate, a sodium bicarbonate, a potassium bicarbonate, a sodium phosphate, a potassium phosphate, and the like. For instance, the alkaline aqueous neutralizer solution can be a 0.25 weight percent solution of sodium bicarbonate in water. Since the alkaline aqueous neutralizer solution is not soluble with the polymer cement it is important to utilize a significant level of agitation to mix the alkaline aqueous neutralizer solution into throughout the polymer cement to terminate the polymerization. Since the alkaline aqueous neutralizer solution is not soluble in the polymer cement it will readily separate after agitation is discontinued.

While the incorporation of the monomer of formula I via direct insertion polymerization to stereoregular polar functionalized dienes is successful, there are still functional groups that cannot be directly incorporated. For example, primary amine groups RNH₂ are incompatible with the catalytic systems used. To produce the corresponding primary amine functionalized copolymer, the trialkylsilyl groups present in copolymers of the monomer of formula I can be cleaved by the reaction with MeOH to give polydienes functionalized with primary amine groups: 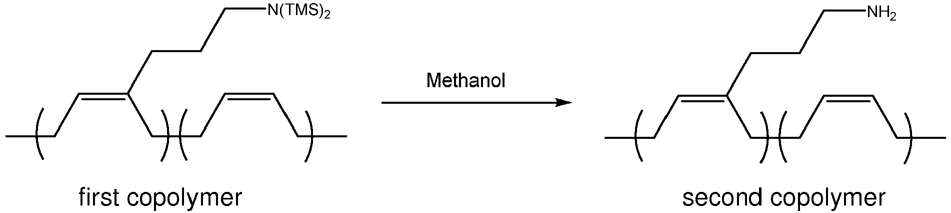 where R¹ and R² of units derived from monomer I are shown in the above example as propane diyl and trimethylsilyl groups.

In a second step of the method then, the first copolymer in solution is mixed with a protic solvent followed by stirring to convert the first copolymer to the second copolymer. Suitable protic solvents include alcohols such as methanol and ethanol, and water. The addition of defined amounts of methanol for example to the copolymer solution followed by stirring for a sufficient amount of times ensures the complete deprotection of the amine groups. Precipitation in methanol of the copolymer can lead to only partially deprotected amine groups. In one embodiment, methanol is added to the first copolymer in solution in an amount corresponding to 40 equivalent to monomer of formula I. After methanol addition, the subsequent mixture is stirred for about 2 hours to ensure complete conversion of the trialkylsilyl groups to primary amine groups. The resulting copolymer functionalized with primary amine groups may be isolated and purified using methods as are known in the art.

This invention is illustrated by the following examples that are merely for the purpose of illustration and are not to be regarded as limiting the scope of the invention or the manner in which it can be practiced. Unless specifically indicated otherwise, parts and percentages are given by weight.

### Example 1

Comonomer **1** (4-methylene-5-hexenyl)-bis(trimethylsilyl)amine was synthesized by Kumada-coupling of TMS₂-(CH₂)₃-MgCl with chloroprene catalyzed by (dppp)NiCl₂.

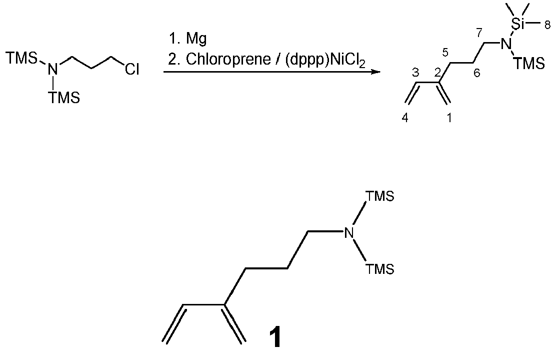

Magnesium turnings (2.25 g, 92.5 mmol, 1.5 equiv.) were layered with THF and activated with dibromoethane (0.36 mL, 0.79 g, 4.2 mmol). A mixture of (3-chloropropyl)-bis(trimethylsilyl)amine (15.0 g, 63.1 mmol, 1 equiv., synthesized according to Davis et al. Journal of Materials Chemistry A 2014, 2, (39), 16507-16515) and dibromoethane (0.36 mL, 0.79 g, 4.2 mmol) in THF (63 mL) was added dropwise and the reaction mixture was stirred for 2 h at 60 °C. Residual magnesium was filtered off, and the clear solution was used in the next step.

(dppp)NiCl₂ (0.252 g, 0.50 mmol) and chloroprene (5.9 g, 66.2 mmol, 1.05 equiv.) were dissolved in THF (21 mL). The reaction mixture was cooled to 0 °C and after the dropwise addition of the (3-(bis(trimethylsilyl)amino)propyl)magnesium chloride solution, the mixture was stirred for 10 minutes at 0 °C and afterwards for 40 minutes at room temperature. Heptane (100 mL) was added to the reaction mixture and THF was removed under reduced pressure. The resulting brown suspension was filtered over celite and the solvent was removed under reduced pressure. The crude product was purified by distillation (73 °C / 3.3·10⁻¹ mbar) to yield (4-methylene-5-hexenyl)-bis(trimethylsilyl)-amine (12.27 g , 48 mmol, 76%) as a colorless liquid.
**¹H-NMR** (400 MHz, C₆D₆, 27 °C) δ = 6.31 (dd, ³*J*_{HH}= 17.6 and 11.2 Hz, 1H, H3), 5.17 (d, ³*J*_{HH}= 17.6 Hz, 1H, H4), 4.97 (d, ³*J*_{HH}= 11.2 Hz, 1H, H4), 4.93 (s, 2H, H1), 2.78 (m, 2H, H7), 2.06 (t, ³*J*_{HH}= 7.6 Hz, 2H, H5), 1.59 (m, 2H, H6), 0.13 (s, 18H, H8).
**¹³C-NMR** (100 MHz, C₆D₆, 27 °C) δ = 146.3 (C2), 139.2 (C3), 116.1 (C1), 113.4 (C4), 45.9 (C7), 34.1 (C5), 29.4 (C6), 2.3 (C8).

### Example 2

Comonomer **1** was copolymerized with 1,3-butadiene and isoprene using different Nd-based catalytic systems. These catalytic systems are based on the widely employed Nd-precursor Nd(versatate)₃ (NdV) and are activated with Al-alkyls diisobutylaluminium hydride (DIBALH) or triisobutylaluminium (TIBA) and a Cl-source ethylaluminium sesquichloride (EASC) or [PhNMe₂H]⁺ [B(C₆F₅)₄]⁻. The polymerizations were conducted at elevated temperatures (50-60 °C) in aromatic solvents (benzene or toluene).

### Copolymerizations in an NMR Tube

The used comonomer was mixed with a certain amount of a BD stock solution (2.1 mmol BD per gram solution in C₆D₆). C₆D₆ was added to this mixture if necessary, to reach a total volume of 0.6 mL. This solution was transferred into an NMR tube. To start the polymerization, a certain amount of a preactivated catalyst stock solution (equal to 0.5 µmol Nd) in C₆D₆ was added by syringe immediately before starting the NMR measurements at the indicated temperature. The reactions were monitored by ¹H NMR spectroscopy. The copolymers were worked up by precipitation in dry acetonitrile or methanol (if deprotection is desired) followed by drying under reduced pressure at 50 °C.

### Copolymerizations in a Glass Vial

The used comonomer was mixed with a certain amount of a BD stock solution (2.1 mmol BD per gram solution in toluene) in a glass vial with a magnetic stir bar. To start the polymerization, a certain amount of a preactivated catalyst stock solution was added by syringe (equal to 0.5 µmol Nd). The vial was stirred at 60 °C. The polymerization was quenched by the addition of BHT or a BHT-methanol solution (1 mg BHT per 1 mL MeOH). The copolymers were worked up by precipitation in dry acetonitrile or methanol (if deprotection is desired) followed by drying under reduced pressure at 50 °C.

### Preparation of Catalyst Stock Solutions

Diisobutylaluminium hydride (DIBALH), triisobutylaluminium (TIBA), ethylaluminium sesquichloride (EASC).
**A:** Nd(versatate)₃:TIBA:EASC (1:20:1). 10 equiv. of BD (stock solution in C₆D₆ or toluene, 2.1 mmol/g) and TIBA (20 equiv.) were added to a glass vial. Nd(versatate)₃ (NdV, 1 equiv.) was added to this mixture (solution in hexanes, 0.61 mmol/g) and the solution was stirred at room temperature for five minutes. EASC (1 equiv.) was added under stirring to activate the catalyst. The stock solution was filled to the desired amount with C₆D₆ or toluene and can be stored in a glove box at -30 °C for several weeks.
**B:** NdV:DIBALH:EASC (1:20:1). 10 equiv. of BD (stock solution in C₆D₆ or toluene, 2.1 mmol/g) and DIBALH (20 equiv.) were added to a glass vial. NdV (1 equiv.) was added to this mixture (solution in hexanes, 0.61 mmol/g) and the solution was stirred at room temperature for five minutes. EASC (1 equiv.) was added under stirring to activate the catalyst. The stock solution was filled to the desired amount with C₆D₆ or toluene and can be stored in a glove box at -30 °C for several weeks.
**C:** NdV:TIBA:EASC: DIBALH (1:20:1:10). 10 equiv. of BD (stock solution in C₆D₆ or toluene, 2.1 mmol/g), TIBA (20 equiv), and DIBALH (10 equiv.) were added to a glass vial. NdV (1 equiv.) was added to this mixture (solution in hexanes, 0.61 mmol/g) and the solution was stirred at room temperature for five minutes. EASC (1 equiv.) was added under stirring to activate the catalyst. The stock solution was filled to the desired amount with C₆D₆ or toluene and can be stored in a glove box at -30 °C for several weeks.

Results of various polymerizations are given in Table 1

**Table 1**

| entry | cat. | time | diene | func. diene comon. | func. diene : Al ratio | comon. content in polymer^{d)} | M*ₙ*^{e)} | Mw/Mn^{e)} | 1,4-*cis-*content^{f)} ) | 1,4-*trans-*content^{f)} | vinyl-content^{f)} |
|---|---|---|---|---|---|---|---|---|---|---|---|
| | | [h] | [mmol] | [µmol] | [x:1] | [mol%] | [10³ g mol⁻¹] | | [%] | [%] | [%] |
| 1-1 | A^{a)} | 30 | BD: 1.2 | 1 (51) | 5 | 4.2 | 59 | 3.5 | 96.7 | 3.0 | 0.2 |
| 1-2 | B^{b)} | 19 | BD: 0.5 | 1 (76) | 7 | 13.1 | 40 | 1.9 | 94.0 | 5.8 | 0.2 |
| 1-3 | B^{b)} | 19 | BD: 1.2 | 1 (430) | 41 | 45 | 77 | 2.8 | 97.4 | 2.5 | 0.1 |
| 1-4 | B^{b), g), h)} | 8 | -- | 1 (509) | 24 | 100 | n.d. | n.d. | 88 | 8 | 4 |
| 1-5 | C^{c), g), h)} | 8 | -- | 1 (705) | 23 | 100 | 21 | 5 | 90 | 6 | 4 |
| 1-6 | B^{b)} | 19 | IP: 0.8 | 1 (98) | 9 | 11.3 | 105 | 2.4 | 97 | 1 | 2 |
| 1-7 | C^{c)} | 12 | IP: 0.4 | 1 (400) | 26 | 42.8 | 49 | 5.7 | 92 | 5 | 3 |

All reactions performed with 0.5 µmol of Nd at 333K (until otherwise noted) in NMR-tubes in C6D6 until > ca. 90 - 95% diene conversion was reached. a) A: Nd(versatate)3:TIBA:EASC (1:20:1). b) B: NdV:DIBALH:EASC (1:20:1). c) C: NdV:TIBA:EASC: DIBALH (1:20:1:10). d) Determined by 1H NMR spectroscopy of crude reaction mixture and/or isolated polymer. e) Determined by GPC in THF vs. PS standards. f) Determined by 13C NMR spectroscopy of crude reaction mixture and/or isolated polymer. g) 1 µmol Nd. h) Reaction at 353 K.

### Example 3

¹H- and 1D-TOCSY NMR spectra of the dissolved polymer are shown in Figure 1. The -N*H*₂ groups 9 present in the polymer resonate at 0.54 ppm and 1D-TOCSY spectroscopy reveals the connectivity along the propyl side chain to the PBD backbone: Excitation of nitrogen bound -C*H*₂- group 7 (spectrum 2, Figure 1), results in magnetization transfer through coupling to C*H*₂ groups 6 and 5 as well as to -N*H*₂ group 9. Additionally, responses of olefinic *-*C*H*= group 3 and even of the polybutadiene backbone are observed. Irradiation at 0.54 ppm (N*H*₂ group 9, spectrum 1, Figure 1) shows the inverted responses of C*H*₂ groups 7, 6, and 5 clearly corroborating the functionalization with RNH₂ groups. Figure 1: ¹H-NMR (topmost spectrum) and 1D-TOCSY spectra of a BD-**1** copolymer after cleavage of the TMS-groups with MeOH (table 1, entry 1-1, recorded at 27 °C in C₆D₆). Residual THF is marked with *.

## Claims

1. A method of making an amine functionalized elastomer, the method comprising the steps of:
polymerizing at least one first monomer selected from the group consisting of 1,3-butadiene and isoprene and a second monomer of formula I in the presence of a polymerization catalyst in a hydrocarbon solvent to form a first copolymer in solution; 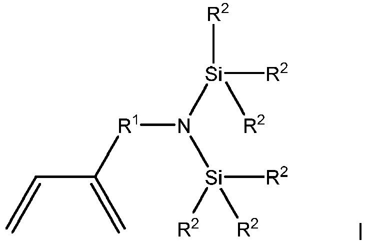
where R¹ is phenylene, a linear or branched alkane diyl group containing from 1 to 10 carbon atoms, or a combination of one or more phenylene groups and one or more linear or branched alkane diyl groups containing from 1 to 10 carbon atoms;
and R² is methyl or ethyl; and
mixing the first copolymer in solution with a protic solvent followed by stirring to convert the first copolymer to a second copolymer given by the formula poly(M1 co M2) wherein M1 is the first monomer and M2 is of formula II 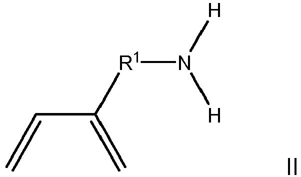 where R¹ is as previously defined.

2. The method of claim 1, wherein the protic solvent is methanol.

3. The method of claim 1 or 2, wherein the first monomer is 1,3-butadiene.

4. The method of at least one of the previous claims, wherein the monomer of formula I is (4-methylene-5-hexenyl)-bis(trimethylsilyl)amine.

5. The method of at least one of the previous claims, wherein the second copolymer comprises from 75 to 99.5 percent by weight of units derived from the first monomer and from 0.5 to 25 percent by weight of units derived from the monomer of formula I.

6. The method of claim 5, wherein the second copolymer comprises from 90 to 99 percent by weight of units derived from the first monomer and from 1 to 10 percent by weight of units derived from the monomer of formula I.

7. The method of at least one of the previous claims, wherein the second copolymer comprises at least 90 percent by weight of cis 1,4 microstructure content based on the weight of the polybutadiene content of the copolymer.

8. The method of claim 7, wherein the second copolymer comprises at least 95 percent by weight of cis 1,4 microstructure content based on the weight of the polybutadiene content of the copolymer.

9. The method of at least one of the previous claims, wherein the catalyst is a lanthanide-based coordination polymerization catalyst.

10. The method of claim 9, wherein the lanthanide-based coordination polymerization catalyst is a neodymium based catalyst.

11. The method of at least one of the previous claims 1 to 8, wherein the catalyst is a nickel based catalyst.

## Patentansprüche

1. Verfahren zum Herstellen eines aminfunktionalisierten Elastomers, wobei das Verfahren die folgenden Schritte umfasst:
Polymerisieren wenigstens eines ersten Monomers, das aus der Gruppe ausgewählt ist, die aus 1,3-Butadien und Isopren besteht, und eines zweiten Monomers der Formel I in der Gegenwart eines Polymerisationskatalysators in einem Kohlenwasserstofflösungsmittel, um ein erstes Copolymer in Lösung auszubilden; 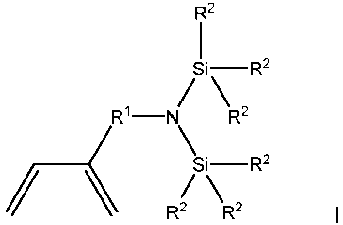
wobei R¹ Phenylen, eine lineare oder verzweigte Alkandiylgruppe, die von 1 bis 10 Kohlenstoffatome enthält, oder eine Kombination aus einer oder mehreren Phenylengruppen und einer oder mehreren linearen oder verzweigten Alkandiylgruppen, die von 1 bis 10 Kohlenstoffatome enthalten, ist; und
R² Methyl oder Ethyl ist; und
Mischen des ersten Copolymers in Lösung mit einem protischen Lösungsmittel, gefolgt von Rühren, um das erste Copolymer in ein zweites Copolymer umzusetzen, das durch die Formel poly(M1 co M2) gegeben ist, wobei M1 das erste Monomer ist und M2 die Formel II ist 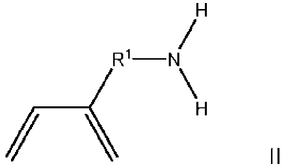 wobei R¹ wie zuvor definiert ist.

2. Verfahren nach Anspruch 1, wobei das protische Lösungsmittel Methanol ist.

3. Verfahren nach Anspruch 1 oder 2, wobei das erste Monomer 1,3-Butadien ist.

4. Verfahren nach wenigstens einem der vorhergehenden Ansprüche, wobei das Monomer der Formel I (4-Methylen-5-hexenyl)-bis(trimethylsilyl)amin ist.

5. Verfahren nach wenigstens einem der vorhergehenden Ansprüche, wobei das zweite Copolymer von 75 bis 99,5 Gew.-% von Einheiten, die von dem ersten Monomer abstammen, und von 0,5 bis 25 Gew.-% von Einheiten umfasst, die von dem Monomer der Formel I abstammen.

6. Verfahren nach Anspruch 5, wobei das zweite Copolymer von 90 bis 99 Gew.-% von Einheiten, die von dem ersten Monomer abstammen, und von 1 bis 10 Gew.-% von Einheiten umfasst, die von dem Monomer der Formel I abstammen.

7. Verfahren nach wenigstens einem der vorhergehenden Ansprüche, wobei das zweite Copolymer wenigstens 90 Gew.-% eines cis-1,4-Mikrostrukturgehalts basierend auf dem Gewicht des Polybutadiengehalts des Copolymers umfasst.

8. Verfahren nach Anspruch 7, wobei das zweite Copolymer wenigstens 95 Gew.-% eines cis-1,4-Mikrostrukturgehalts basierend auf dem Gewicht des Polybutadiengehalts des Copolymers umfasst.

9. Verfahren nach wenigstens einem der vorhergehenden Ansprüche, wobei der Katalysator ein Koordinationspolymerisationskatalysator auf Lanthanoidbasis ist.

10. Verfahren nach Anspruch 9, wobei der Koordinationspolymerisationskatalysator auf Lanthanoidbasis ein Katalysator auf Neodymbasis ist.

11. Verfahren nach wenigstens einem der vorhergehenden Ansprüche 1 bis 8, wobei der Katalysator ein Katalysator auf Nickelbasis ist.

## Revendications

1. Procédé destiné à la préparation d'un élastomère possédant une fonctionnalité amine, le procédé comprenant les étapes dans lesquelles :
on polymérise au moins un premier monomère qui est choisi parmi le groupe constitué par le 1,3-butadiène et l'isoprène et un deuxième monomère qui répond à la formule I, en présence d'un catalyseur de polymérisation dans un solvant à base d'hydrocarbure afin d'obtenir un premier copolymère en solution : 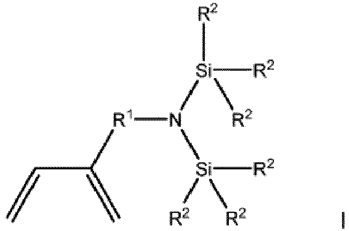 dans laquelle R¹ représente un groupe phénylène, un groupe alcanediyle à chaîne droite ou à chaîne ramifiée contenant de 1 à 10 atomes de carbone, ou bien une combinaison d'un ou de plusieurs groupes phénylène et d'un ou de plusieurs groupes alcanediyle à chaîne droite ou à chaîne ramifiée contenant de 1 à 10 atomes de carbone ; et
on mélange le premier copolymère en solution avec un solvant protique et on agite ensuite afin de transformer le premier copolymère en un deuxième copolymère répondant à la formule poly(M1 co M2) dans laquelle M1 représente le premier monomère et M2 répond à la formule II : 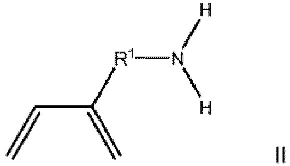 dans laquelle R¹ est tel que défini ci-dessus.

2. Procédé selon la revendication 1, dans lequel le solvant protique est le méthanol.

3. Procédé selon la revendication 1 ou 2, dans lequel le premier monomère est le 1,3-butadiène.

4. Procédé selon au moins une des revendications précédentes, dans lequel le monomère répondant à la formule I est la (4-méthylène-5-hexényl)-bis(triméthylsilyl) amine.

5. Procédé selon au moins une des revendications précédentes, dans lequel le deuxième copolymère comprend de 75 à 99,5 % en poids d'unités qui dérivent du premier monomère et de 0,5 à 25 % en poids d'unités qui dérivent du monomère répondant à la formule I.

6. Procédé selon la revendication 5, dans lequel le deuxième copolymère comprend de 90 à 99 % en poids d'unités qui dérivent du premier monomère et de 1 à 10 % en poids d'unités qui dérivent du monomère répondant à la formule I.

7. Procédé selon au moins une des revendications précédentes, dans lequel le deuxième copolymère comprend au moins 90 % en poids d'une teneur en microstructure 1,4-cis, lorsqu'on se base sur le poids de la teneur du copolymère en polybutadiène.

8. Procédé selon la revendication 7, dans lequel le deuxième copolymère comprend au moins 95 % en poids d'une teneur en microstructure 1,4-cis, lorsqu'on se base sur le poids de la teneur du copolymère en polybutadiène.

9. Procédé selon au moins une des revendications précédentes, dans lequel le catalyseur est un catalyseur de polymérisation par coordination à base de lanthanide.

10. Procédé selon la revendication 9, dans lequel le catalyseur de polymérisation par coordination à base de lanthanide est un catalyseur à base de néodyme.

11. Procédé selon au moins une des revendications 1 à 8, dans lequel le catalyseur est un catalyseur à base de nickel.
